Europäisches Patentamt

European Patent Office

Office européen des brevets

(19)

(11) Publication number: 0 151 344
A2

(12) # EUROPEAN PATENT APPLICATION

(21) Application number: 84308633.1

(22) Date of filing: 12.12.84

(51) Int. Cl.⁴: **A 23 G 3/30**

(30) Priority: 31.01.84 US 575610

(43) Date of publication of application:
14.08.85 Bulletin 85/33

(84) Designated Contracting States:
BE CH DE FR GB LI

(71) Applicant: WARNER-LAMBERT COMPANY
201 Tabor Road
Morris Plains New Jersey 07950(US)

(72) Inventor: Cherukuri, Subraman Rao
10 Jean Drive
Towaco New Jersey 07082(US)

(72) Inventor: Bikkina, Krishnayya
100 Paulisyn Avenue
Passaic New Jersey 07055(US)

(74) Representative: Jones, Michael Raymond et al,
HASELTINE LAKE & CO. Hazlitt House 28 Southampton
Buildings Chancery Lane
London WC2A 1AT(GB)

(54) A chewing gum composition, a process for preparing a chewing gum tablet therefrom, and a chewing gum tablet.

(57) A chewing gum composition suitable for use in the preparation of a chewing gum tablet, the gum composition comprising a blended mixture of:

chewing gum granules which comprise a chewing gum base, a grinding aid and a sweetening agent; and

a compression aid which comprises two or more components chosen from a lubricant, a glidant and an anti-adherent;

wherein the gum composition has a moisture content of from 2% to 8% by weight of the gum composition.

Additionally, a process for producing a chewing gum tablet is disclosed. The tabletted compositions may contain one or more medicament.

EP 0 151 344 A2

A CHEWING GUM COMPOSITION, A PROCESS FOR PREPARING A CHEWING GUM TABLET THEREFORM, AND A CHEWING GUM TABLET

This invention relates to a tableted chewing gum composition having a moisture content of about 2% to about 8% by weight of the total chewing gum tablet, and a method for producing the same. More particularly the tableted chewing gum compositions comprise a blend of chewing gum granules and a compression aid which is formed into tablets having a moisture content of about 2% to about 8% by weight of the tablet chewing gum composition.

Conventional chewing gum compositions are difficult to form into chewing gum tablets because of their moisture content. Traditional chewing gum compositions contain about 2% to about 8% by weight of water. As a consequence, attempts to grind the chewing gum compositions using readily available and standard techniques known in the art, have been unsuccessful. Generally the chewing gum will jam the grinding machine, sticking to blades, screens and other surfaces. In attempting to tablet chewing gum compositions having a moisture content greater than 2% by weight, various other problems occur, e.g. adherence to the punch press, compaction in the punch press hopper, poor flow in the feeder section and difficulties with compressibility. Attempts to make tableted chewing gums have therefore concentrated on alleviating moisture from the composition prior to grinding and formation of granulation.

Attempts have been made to chill or freeze the chewing gum composition to facilitate grinding and alleviate the problems mentioned above. U.S. Patent 4,000,321 discloses a chewing gum which is extracted and subsequently cooled to temperatures of -15 to -20°C for the purpose of comminuting it to a granular material. German Patent 2,808,160 utilizes a low temperature in order to provide granulation suitable for tableting. Similarly, U.S. Patents 4,161,544, 4,370,350 and European Patent Application 17691 (1980) use a freezing temperature to facilitate comminution of chewing gum compositions to granular materials suitable for compaction into a tablet.

U.S. Patent 3,262,784 discloses a gum tablet which requires as much as 93.7% sweetener. U.S. Patent 4,405,647 discloses the comminution of chewing gum in a fluidized bed in the presence of a sweetener or inert constituent, e.g., a silicate.

The prior art has therefore basically followed two pathways in attempting to successfully make chewing gum tablets. The first pathway was to alleviate the moisture problem by freezing the chewing gum compositions. While this technique is feasible, it requires equipment other than conventional tableting equipment and requires careful control of humidity during the tableting process. The second pathway focused on changing the conventional formulations and methods to produce granulations having less than 2% by weight of moisture.

The art has recognized the difficulty encountered due to moisture in attempting to form gum granulations suitable for tableting and as a result, there have been no successful chewing gum tablets produced having moisture content of about 2% or greater using a conventional formulation.

In the normal course of developing formulations and in the routine production of tablets, processing problems occur. Sometimes the fault lies with the formula, sometimes with the compression equipment, and sometimes with a combination of these reasons. Capping, lamination, picking and sticking, compressibility and flowability are the most common processing problems. These problems are generally encountered with any tableting process, but are further complicated,

3

as mentioned above, when attempting to tablet conventional chewing gum compositions due to the high moisture content, e.g. 2% by weight or more, as mentioned above.

Capping is the term used in the tableting art to describe the partial or complete separation of the top or bottom of a tablet from the main body. This will occur if the tablet does not release completely from the tablet punch face. Lamination is the separation of a tablet into two or more distinct layers. Lamination is generally a result of poor granulation and compaction. The cause of both these problems is generally ascribed to the entrapment of air among the granules, which does not escape during compression but afterward when the pressure is released. Granulations of the prior art which are light or too dry or powdery are prone to this difficulty. A certain percentage of water is sometimes essential to good compaction and the tableting art has taught the use of hygroscopic substances to help maintain the proper moisture content. As will be described further herein, the instant inventive tableted chewing gum compositions make use of a compression aid containing a lubricant to remedy this problem. Similarly, the problem of lamination is avoided by the instant compositions by the use of a glidant to permit free flow of the particles both in the tableting machine hopper and in the punch apparatus itself. This facilitates proper compaction of the granulation into a tablet form.

Picking describes the removal of material from the surface of the tablet and its adherence to the face of the punch. It is particularly prevalent in small enclosed areas of engravings which are difficult to cut cleanly and polish smoothly. Sticking describes the adhesion of granulation to the die wall. When this occurs, the lower punches fail to move freely, resulting

4

in strain on the punch heads and other machinery parts. This term is also often used to refer to the build-up of material on the punch faces. Excessive moisture is often responsible for these problems. The instant invention employs an anti-adherent as a component of the compression aid to avoid these problems.

It is evident that there is a need in the art for a tableted chewing gum composition and method for tableting the same which uses conventional prior art compositions and which does not suffer from the disadvantages due to moisture described in the art.

It has surprisingly been found that a conventional chewing gum composition having a moisture content of about 2% to about 8% by weight can be granulated utilizing a grinding aid and subsequently blending the resultant granulation with a compression aid. More particularly this invention concerns a tableted chewing gum composition comprising a blended mixture of:

(i) chewing gum granules comprising a chewing gum base, a grinding aid and a sweetening agent; and

(ii) a compression aid comprising at least two components selected from the group consisting of a lubricant, a glidant, an anti-adherent and mixtures thereof;

said tableted chewing gum composition having a moisture content of about 2% to about 8% by weight.

Additionally, this invention relates to a process of producing a chewing gum tablet which comprises:

(i) preparing a chewing gum composition;

(ii) grinding the chewing gum composition by utilizing a grinding aid to form a granulation;

(iii) blending the granulation with a compression aid;

(iv) tableting the chewing gum granules and recovering the tableted chewing gum composition.

The inventive chewing gum compositions and methods require the use of the compression aid to alleviate the problems associated with moisture contents of 2% by weight or greater. Additionally, this invention requires the use of a grinding aid to facilitate the formation of the granulation, which is later to be tableted. The use of the grinding aid and the compression aid are critical to the practice of this invention because they allow for the formation of tableted chewing gum compositions having a moisture content of greater than 2% by weight; and preferably about 2% to about 8% by weight of the tableted chewing gum. As previously discussed, moisture present in these amounts caused a variety of problems when attempting to use conventional chewing gum formulations and techniques form a chewing gum tablet. The use of the grinding aid to facilitate formation of a chewing gum granulation which granulation is subsequently blended with the compression aid, allows for chewing gum tablets to be formed having the moisture content mentioned above.

The grinding aid is generally present in the chewing gum composition in amounts of about 0.5% to about 5% by weight of the tableted chewing gum composition, and preferably about 1.5% to about 4% by weight. The most preferred range is about 1% to about 2% by weight. The grinding aid must be finely divided, preferably having a mesh size of about 80 or less, and is preferably water soluble, although water solubility is not critical to its function in the inventive method and compositions. Any compound having a mesh size of about 80 or less and which absorbs moisture may be used as a grinding aid. Among the suitable representative grinding aids are food starches, talc, sugar, polyhydric alcohols, maltodextrin, modified maltodextrins, fumed silica, alkali metal carbonates such as calcium carbonate, and mixtures thereof. Modified maltodextrin having a bulk density of about 3 to about 17 lbs/cu. ft., mannitol and sorbitol are other specific examples of useful grinding aids. Of particular usefulness is a mixture of food starches with sugar 6X or less in size in a 1:1 weight ratio; or food starches, and a polyhydric alcohol, e.g., sorbitol in the same weight ratio.

The chewing gum granulation can have a particle size of about 4 to about 30 mesh. Particles of less than 30 mesh present a high surface area for coverage by the grinding aid. Additionally, there will generally be a wide distribution of particle size when fines are used. This will result in segregation during tableting. Furthermore, the fine particles do not compact well in the tableting process. At a particle size of greater than 4 mesh the particles do not feed well into the tableting press.

In the grinding process, the grinding aid is added continuously and the feed rates of the chewing gum composition and grinding aid are adjusted to obtain the proper weight percent of grinding aid in the chewing gum composition. The chewing gum composition granules of the instant invention can be formed using standard grinding techniques known in the art. The granulation should have good flow properties for precise volumetric feeding of the material to the die cavity. It should also have good compressibility to form the compact or tablet and once the tablet is formed it should be easily ejected from the die.

As described above, the compression aid is comprised of at least two components selected from the group consisting of a lubricant, a glidant, an anti-adherent and mixtures thereof. These components are well recognized in the tableting art for their individual functions, but heretofore have not been used in chewing gum compositions in the manner described herein.

Traditionally, the problems associated with tablet manufacture include the flow of the granulation, the adhesion of material to the punches and dies, and the release of the completed tablet from its mold. The art has often generally used the term "lubricant" to refer to substances useful in ameliorating these difficulties. The problems of granulation flow, adhesion and tablet release are quite different and require distinct solutions. As such, the terms lubricant, glidant and anti-adherent are used herein to define the specific function and purpose of each material used in solving these problems.

By the term lubricant is meant agents that act between surfaces in relative motion to prevent friction and wear. In the manufacture of tableted chewing gum compositions, lubricants are used to prevent excess wear on dies and punches. True lubricant action is particularly required immediately after compression of the tablet within the die to reduce the friction between the inner die wall and the tablet edge during the ejection cycle. The absence of a lubricant at this stage may cause straining of the press parts and tablets formed thereby may be damaged. Additionally, lubricants held avoid the problem of capping as discussed previously.

The lubricants useful in the inventive compositions and method are among those well known in the art. Representative examples may be selected from the group

8

consisting metallic stearates, hydrogenated vegetable oil, partially hydrogenated vegetable oils, animal fats (e.g. triglycerides), modified maltodextrins, polyethylene glycols, polyoxyethylene monostearate and mixtures thereof. Of particular usefulness are magnesium stearate, calcium stearate and mixtures thereof. Hydrogenated cottonseed oil, solid vegetable oil, hydrogenated soya oil and mixtures thereof are the preferred oil lubricants. In general, the lubricant or mixture of lubricants is present in the composition in amounts of about 0.25 to about 2% by weight based on the tableted chewing gum composition. If oil lubricants are used, it is preferred they be present in amounts of about 0.4% to about 1% by weight of the tableted chewing gum composition.

A preferred mixture of lubricating agents is a mixture of about 0.5% to about 1.5% by weight of magnesium stearate with about 1% to about 4% by weight maltodextrin, weight percents based on the tableted chewing gum composition.

To solve the problems associated with granulation flow, e.g., the free flow of granulation particles in the tableting machine hopper and in the punch itself, a glidant is used in the inventive compositions. Glidants reduce interparticulate friction and assure smooth and uniform flow of materials from larger apertures to smaller apertures in the tablet presses. Fluidity of the granulating blend is not only important as to the direct effect on uniformity of die fill, and thus uniform tablet weight, but also plays a role in proper homogenity. The contribution a glidant makes toward improving fluidity depends on the chemical nature of the glidant relative to that of the chewing gum granulation, i.e. on the presence of unsaturated valencies or bonds which have potential chemical interaction; and upon physical factors such as size and shape distribution of both the glidant particles and the chewing gum granulation.

For any particular system there is usually an optimum concentration above which the glidant may start to act as an antiglidant. The optimum level depends on several factors, one of which is the moisture level of the chewing gum granulation. In the instant invention, the tableted chewing gum composition is to have a moisture content of about 2% to about 8% by weight. The amount of glidant present in the tableted chewing gum composition is from about 0.5% to about 5% by weight of the tableted chewing gum composition. Those glidants useful are selected from the group consisting of alkali metal salts, talc, starch, polyhydric alcohols, maltodextrins and mixtures thereof. Preferably the glidant is selected from the group consisting of calcium carbonate, mannitol, sorbitol, maltodextrin and mixtures thereof present in amounts of about 1% to about 2.5% by weight of the tableted chewing gum composition.

Anti-adherents function to prevent tablet granulations from sticking to the faces of the punches and the die walls, but most importantly, prevent adherence of chewing gum granules from adhering to one another, a phenomenon known as blocking. Anti-adherents may be added to the chewing gum composition while the composition is in the hopper, or subsequent to grinding. The anti-adherent is selected from the group consisting of silicates, silicon dioxide, talc, alkali metal phosphates and mixtures thereof present in amounts of about 0.2% to about 1% by weight of the tableted chewing gum composition and preferably about 0.3 to about 0.6% by weight. Generally the anti-adherent is a finely divided, low bulk density powder which is preferably water insoluble. The preferred anti-adherents are fumed silica and talc. The term fumed silica is meant to include pyrogenic silicas, micron sized silicas and hydrated silicas.

It is apparent from the above discussion of the three individual components of the compression aid, that certain materials may be useful in more than one component. For example, maltodextrins are useful both as a lubricant as defined herein, and as a glidant. However, frequently one material may function well in one mechanism, e.g., hydrogenated vegetable oil as a lubricant, but will be ineffective or detrimental toward another mechanism, e.g., hydrogenated vegetable oil may tend to actually retard the flow characteristics of certain solids, making it a poor glidant. Thus, when selecting the specific combination of compression aid components, attention should be given to maximize the advantages of each component and to prevent unnecessary cancellation of one components effectiveness. When a component of the compression aid has a dual function, e.g., as a lubricant and a glidant, the amount utilized is the preferred amount for the function desired. For example, where 2.0% by weight of maltodextrin is used as a lubricant, it also serves as a glidant, and additional amounts of maltodextrin as a glidant are not required.

In the practice of this invention any conventional chewing gum composition of the prior art may be used providing it has a moisture content of about 2% to about 8% by weight of the chewing gum composition. Such chewing gum compositions generally comprise a gum base, sweetener, and a softener.

As is well known in the art, the gum base comprises natural or synthetic rubbers or elastomers. The elastomers, of course, are not vulcanized. Illustrative, non-limiting examples of gums or elastomers useful as gum bases are natural rubber, chicle, lechi caspi, jelutong, polyisobutylene, isobutylene-isoprene copolymers, styrene-butadiene copolymers and mixtures thereof. The gum base can comprise 14% to about 50% by weight and preferably about 20% to about 30% by weight based on the total chewing gum composition.

The gum base may contain elastomer solvents to aid in softening the gum or elastomer component. Illustrative, non-limiting examples of such elastomer solvents are the methyl, glycerol or pentaerythritol esters of rosins or modified rosins, such as hydrogenated, dimerized or polymerized rosins or mixtures thereof. Examples of the rosins useful in the preparation of gum bases include the pentaerythritol ester of partially hydrogenated wood rosin, pentaerythritol ester of wood rosin, glycerol ester of partially dimerized rosin, glycerol ester of polymerized wood rosin, glycerol ester of tall oil rosin, glycerol ester of wood rosin and partially hydrogenated wood rosin, as well as partially hydrogenated methyl ester of rosin such as polymers of $\alpha$-pinene or $\beta$-pinene. Terpene resins, including polyterpene and mixtures thereof are also useful. The elastomer solvent can be employed in an amount ranging from about 10% to about 75% by weight of the gum base, preferably about 45% to about 70% by weight.

Corn syrup can serve as a source of moisture and it can be utilized at about 8% to about 30% by weight, preferably about 15% to about 20% by weight. The specific amount of corn syrup will depend on the overall formulation of the gum composition and is controlled to provide a moisture content of about 2% to about 8% as is customary in the art. As used in the specification and claims the item "corn syrup" means corn syrup and fructose syrups, as well as simple syrup.

The chewing gum compositions of this invention will generally include a sweetening agent. The sweetening agent may be selected from a wide range of materials including water-soluble agents, water-soluble artificial sweeteners, and dipeptide based sweeteners, including mixtures thereof. Without being limited to particular sweeteners, representative illustrations encompass:

A.   Water-soluble sweetening agents such as monosaccharides, disaccharides and polysaccharides such as xylose, ribose, glucose, mannose, galactose, fructose, dextrose, sucrose, sugar, maltose, partially hydrolyzed starch, or corn syrup solids and sugar alcohols such as sorbitol, xylitol, mannitol and mixtures thereof.

B.   Water-soluble artificial sweeteners such as the soluble saccharin salts, i.e., sodium or calcium saccharin salts, cyclamate salts, acesulfam-K and the like, and the free acid form of saccharin.

C.   Dipeptide based sweeteners such as L-aspartyl-L-phenylalanine methyl ester and materials described in U.S. Patent No. 3,492,131 and the like.

In general, the amount of sweetener will vary with the desired amount of sweeteners selected for a particular chewing gum. This amount will normally be 0.001% to about 90% by weight when using an easily extractable sweetener. The water-soluble sweeteners described in category A above, are preferably used in amounts of about 25% to about 75% by weight, and most preferably from about 50% to about 65% by weight of the final chewing gum composition. In contrast, the artificial sweeteners described in categories B and C are used in amounts of about 0.005% to about 5.0% and most preferably about 0.05% to about 2.5% by weight of the final chewing gum composition. These amounts are ordinarily necessary to achieve a desired level of sweetness independent from the flavor level achieved from flavor oils. While water may be added, independently, with dry sweeteners, it will generally be added as part of a corn syrup.

In order that the chewing gum composition have an acceptable texture it is preferred that a softening agent be included in the composition. Softening agents as used herein refers to emulsifiers, plasticizers, softeners and the like. Illustrative, nonlimiting examples of suitable emulsifiers include lecithin, fatty acid and monoglycerides, di-and triglycerides, propylene glycol monostearate, glycerol monostearate and mixtures thereof. Such materials may be used in amounts of about 1% to about 25% by weight.

A variety of different ingredients such as plasticizers or softeners including hydrogenated vegetable oil, lanolin, lecithin, stearic acid, sodium stearate, potassium stearate, glyceryl triacetate, glycerine and the like as well as natural waxes, petroleum waxes, such as polyethylene waxes, paraffin waxes and microcrystalline waxes may also be incorporated into the gum base to obtain a variety of desirable textures and consistency properties. These materials are generally employed in amounts of up to 30% by weight and preferably in amounts of about 1% to about 25% by weight, and more preferably about 3% to about 70% by weight of the chewing gum composition.

The chewing gum compositions of this invention can additionally include the conventional adjunctives such as coloring agents, flavoring agents, fillers, plasticizers, bulking agents, emulsifiers, softeners and mixtures thereof. The coloring agents include titanium dioxide and the well known food dyes of the art. The fillers include but are not limited to aluminum hydroxide, alumina, aluminum silicates, calcium carbonate, and mixtures thereof.

The use of fillers is optional and they may be used in varying amounts. Preferably, the amount of fillers when used will vary from about 4% to about 30% by weight of the final chewing gum composition.

Flavoring agents well known to the chewing gum art can be added to the chewing gum compositions of this invention. Both synthetic flavoring agents and natural flavoring agents derived from plants, leaves, flowers, fruits, etc. and combinations thereof are useful. These flavoring agents are generally liquids. However, they can also be used as spray dried solids. The use of flavoring agents having other distinct physical forms such as powdered flavorings, beaded flavorings and encapsulated flavorings are within the scope of this invention. Illustrative non-limiting examples of flavoring agents include spearmint oil, cinnamon oil, oil of wintergreen (methysalicylate) and peppermint oils. Synthetic and natural fruit flavors useful as flavoring agents include such flavorings as citrus oil, e.g., lemon, orange, lime and grapefruit; fruit essences including apple, strawberry, cherry, banana, pineapple; and the various flavorings such as aldehydes and esters including cinnamyl acetate, cinnamaldehyde, citral diethyl acetal, dihydrocavryl acetate, eugenyl formate, p-methylamisol, and so forth. Generally any flavoring or food additives such as those described in Chemicals Used In Food Processing, pub 1274 by the National Academy of Sciences, pages 49-53 and 63-258 may be used.

The term "flavoring agent" as used in the specification and claims means any of the natural and synthetic flavorings used in the chewing gum art and in particular those flavoring agents heretofore described.

The amount of flavoring agent employed is normally a matter of preference and will be determined by such factors as flavor type and the strength desired. In general, amounts of about 0.05% to about 3.0% by weight of the overall chewing gum composition are used, preferably about 0.3% to about 1.5%, more preferably about 0.7% to about 1.2% by weight.

While the chewing gum composition will include flavoring agents, it is within the scope of this invention to add additional flavoring agents to the chewing gum composition granules immediately prior to tableting. Preferably, the additional flavoring agent is in a dry form, e.g., spray dried flavoring or encapsulated flavoring. However, liquid flavoring can be added if it is first blended with the dry components of the lubricating system.

As used in the specification and claims the term "chewing gum composition" means the afore-described prior art gum compositions comprising a gum base, sweetener and softening agent as well as other adjunctives known to the chewing gum art. These chewing gum compositions generally have a moisture content of at least 2% to about 8% by weight of the compositions, preferably about 2% to about 6% by weight, more preferably about 2% to about 4% by weight.

Typical chewing gum compositions for use in the practice of this invention are set forth in Table I.

TABLE I

| Component | Percent by Weight |
|-----------|-------------------|
| Gum base | 14 to 50 |
| Sweeteners | 0.001 to 90 |
| Softening Agent | 1.0 to 25 |

In preparing the tableting formulation the composition of the compression aid and flavorings is determined and the balance is made up of the chewing gum granulation.

The chewing gum compositions made from the instant process may be of the sugar or sugarless variety and may be formulated into regular or non-adhering chewing gum pieces. Bubble gum, stick gum, center-filled and other gum piece forms well known to the art are contemplated.

While the invention has been described in terms of tableting a conventional chewing gum composition, it is within the scope of this invention to include medicaments, the resultant tablet being a medicated chewing gum tablet.

The medicament is added to the gum granules along with the compression aid. Pharmaceutical drugs or other active agents are added in a number of forms including encapsulation, but they are preferably added in a dry state. Active agents may themselves be granulated and added in this form to the tableted chewing gum composition.

Liquid, water soluble drugs can be added to a solution of modified maltodextrin and spray dried. Liquid, oil soluble drugs and active agents can be blended with the compression aid components prior to mixing with the gum granules. In that event the liquid drug or active agent should not exceed more than 30% by weight of the compression aid, preferably not more than 20% by weight.

The advantage of the tableted gum composition of this invention as a means for dispensing drugs medicaments and other active agents is that the component is trapped between granules and not within the gum composition. Hence, it is readily bioavailable and nearly completely released upon chewing of the gum. The term "active agent" as used in the specification and claims means any drug, medicament, or other substance taken for its medicinal or dietary properties.

Illustrative, non-limiting examples of active agents which can be incorporated in the gum tablets of this invention include benzocaine, phenolphthaline, laxatives, lobeline sulfate (no smoking aid), calcium carbonate or magnesium carbonate as antacids, aspirin, fluorides for tooth decay prevention, nicotine as a smoking substitute, vitamins, minerals, caffeine, citrated caffeine, caffeine sodium benzoate, caffeine hydrochloride, appetite suppresants, etc.

Where the active agent is a dry powder it may be added in as much as equal parts by weight as the compression aid. Preferably, however, the active agent comprises about 1 to 5% by weight of the tablet, more preferably about 2% to about 4%, e.g., 3%. For example, where Vitamin C is the active agent it can be added at about 60 mg per tablet. For diet tablets the chewing gum tablet can contain about 5 mg. of benzocain and 75 mg of methylcellulose. Breath deodorizing tablets can contain about 1 mg. of chlorophyll per tablet.

In general, the process of preparing chewing gum compositions comprises adding to a suitable gum kettle a melted blend of gum base and corn syrup and mixing until homogenous. Usually a homogeneous mass is obtained in about six (6) minutes at a temperature of about 55° to about 65°C. Sugar, dextrose, malto dextrin and color are usually then blended into the homogeneous mass for approximately two (2) minutes. Flavor is added next and mixed until sufficently homogeneous.

18

In the process of the inventive compositions, a chewing gum composition containing a grinding aid is made using those general methods of preparation commonly known to the art to produce chewing gum compositions with about 2% to about 8% by weight. The chewing gum composition is then formed into sheets or ropes as is commonly practiced in the art and may be aged for about twenty four hours. The composition is then ground into a granulation to form gum granules at room temperature. Grinding is accomplished using any suitable grinder, for example, a Fritzmill.

The following examples serve to provide further appreciation of the invention but are not meant in any way to restrict the effective scope of the invention. All percentages throughout the specification are by weight of the tableted chewing gum composition unless otherwise indicated.

EXAMPLE I

A chewing gum composition having the following formulation was prepared.

| Component | Percent by Weight |
|---|---|
| Gum base | 21 |
| Corn syrup | 17 |
| Lecithin | 0.2 |
| Glycerin | 0.45 |
| Coloring | 0.1 |
| Flavoring | 0.85 |
| Low density maltodextrin | 1.0 |
| Sugar | 59.4 |
| | 100.00% |

The gum base, corn syrup and lecithin were blended together in a kettle at about 82-94°C for two minutes to obtain a homogeneous mixture. The remaining components were added to this mixture and blended for about five minutes. The gum composition was discharged into

kettles and formed into ropes which were conditioned for 24 hours. The moisture content of the chewing gum was 3% by weight. The chewing gum composition was then ground into granules in a Fitzmill using 2% by weight based on the chewing gum composition of starch as the grinding aid.

The granules formed had a particle size of about 4 to 20 mesh. There was no sticking or compacting during grinding, and no gum composition adhered to the equipment.

### EXAMPLE II

Example I was repeated substituting 2% of modified maltodextrin having a bulk density of about 4 lbs/cu.ft. as the grinding aid. The results were substantially the same as those achieved in Example I except that the granules appeared to be more free flowing.

### EXAMPLE III

The gum granules prepared in Example II were tableted using the formulations set forth in Table II.

20

## TABLE II
### Tabletting Formulation

| Component | Run No. | | | | | | | |
|---|---|---|---|---|---|---|---|---|
| | 1 | 2 | 3 | 4 | 5 | 6 | 7 | 8 |
| Gum granules | 98.5 | 97.5 | 95.5 | 95.5 | 95 | 93.0 | 94.0 | 95.0 |
| Mg stearate | 1.0 | 1.5 | 1.5 | 1.5 | 1.5 | 1.5 | 1.5 | 1.0 |
| Fumed silica | 0.5 | 0.5 | 0.5 | 0.5 | 0.5 | 1.0 | 1.0 | 0.5 |
| Fat[1] | - | 0.5 | 0.5 | 0.5 | 0.5 | - | - | - |
| Modified maltodextrin powdered | | - | 2.0 | 2.0 | 2.0 | 1.5 | 1.5 | 1.5 |
| flavoring | - | - | - | - | 0.5 | 2.0 | 2.0 | 2.0 |
| Fat[2] | - | - | - | - | - | 0.5 | - | - |
| Total | 100 | 100 | 100 | 100 | 100 | 100 | 100 | 100 |

[1] powdered hydrogenated cottonseed oil.

[2] powdered hydrogenated vegetable oil.

The granules were blended with the remaining constitutes at room temperature for about 15 minutes in a Patterson Kelly Blender and tableted in a Stokes tableting machine.

The results of these runs were as follows:

| Run No. | Remarks |
|---|---|
| 1. | Flow problems in tableting machine; sticking in punch die. |
| 2. | Good flow; sticking in punch; fatty taste. |
| 3. | Good flow; good die punch release; no fatty taste; low flavor. |
| 4. | Same as Run No. 3. |
| 5. | Good flow; good release; high flavor |
| 6. | Same as Run No. 5, but with improved flavor. |
| 7. | Good flow; good release; good flavor. |
| 8. | Good flow; good release; good flavor. |

The results of Run Nos. 7 and 8 demonstrate that where modified maltodextrin is used, the powdered triglycerides (hydrogenated oils' are not required.

21

## EXAMPLE IV

A chewing gum composition was formulated having the following composition:

| Component | Weight Percent |
|---|---|
| Gum base | 22 |
| Corn syrup | 18 |
| Lecithin | 0.4 |
| Glycerin | 0.05 |
| Flavor | 1.4 |
| Sugar | 57.55 |

The gum base, corn syrup and softeners were blended as in Example I at about 82 to 94°C for two minutes. The remaining ingredients were added to this mixture and blended for about five minutes. Following the procedure of Example II the gum was formed into granules using modified maltodextrin as the grinding aid. The moisture content of the chewing gum composition was 3.33% by weight.

The following formulation was used to prepare chewing gum tablets using the procedure of Example III.

| Component | Weight Percent |
|---|---|
| Gum granules | 95.5 |
| Mg stearate | 1.5 |
| Fumed silica | 0.5 |
| Modified maltodextrin | 2.0 |
| Hydrogenated cottonseed oil | 0.5 |

The material was free flowing in the tableting machine hopper and feeder and did not stick in the mold.

22

## EXAMPLE V

A sugar free formulation was used to prepare a chewing gum base as follows.

| Component | Weight Percent |
|---|---|
| Gum base | 24.0 |
| Glycerin | 0.5 |
| Lecithin | 0.5 |
| Mannitol | 8.0 |
| Sorbo liquid | 14.0 |
| Sorbitol | 52.0 |
| Sodium saccharin | 500ppm |
| Flavor | 1.4 |
| Color | 0.1 |

The gum base and softener were blended for 2 minutes at 82 to 94°C and the mannitol and sorbo liquid (sorbitol solution) were added with continued blending for two minutes. Then sorbitol, flavor and sodium saccharin were added with mixing for an additional six minutes. The moisture content of the chewing gum was 2% by weight. The gum composition was granulated as in Example II, using mannitol instead of maltodextrin as the grinding aid, and tableted using the following tableting composition:

| Component | Weight Percent |
|---|---|
| Gum granules | 95.0 |
| Flavoring (powdered) | 2.0 |
| Fumed silica | 1.0 |
| Powdered hydrogenated vegetable oil. | 0.5 |
| Mg stearate | 1.5 |
| | 100.0 |

23

## EXAMPLE VI

Example V was repeated using the following tableting composition:

| Component | Weight Percent |
|---|---|
| Gum granules | 93.0 |
| Flavoring (powdered) | 2.0 |
| Fumed silica | 1.0 |
| Powdered hydrogenated cotton seed oil | 0.5 |
| Mg stearate | 1.5 |
| Mannitol | 2.0 |
| | 100.0 |

The lubricating system comprising the silica, hydrogenated oil, magnesium stearate and mannitol were blended together with the flavoring and blended with the gum granules prior to tableting. The gum granules flowed freely in the hopper and feeder of the tableting machine and released well from the punch die.

The use of active agents in the gum tablets of this invention can be illustrated by the following example.

## EXAMPLE VII

A chewing gum composition was prepared using the following formulation:

| Component | Weight percent |
|---|---|
| Gum base | 22.0 |
| Corn Syrup | 18.0 |
| Sugar | 57.4 |
| Flavoring | 1.0 |
| Softeners | 0.95 |
| Color (yellow #6) | 0.15 |
| Malic Acid | 0.5 |
| | 100.00 |

The chewing gum composition was prepared and granulated in accordance with the procedure of Example III. The chewing gum had a moisture content of about

24

3.3% by weight. Gum granules were made from the chewing gum and then tablets were made therefrom using the following tableting composition:

| Component | Weight percent |
|---|---|
| Gum Granules | 92.14 |
| Coated Ascorbic Acid | 1.35 |
| Sodium ascorbate | 1.31 |
| Flavoring | 2.0 |
| Modified Maltodextrin | 1.5 |
| Mg stearate | 1.0 |
| Fumed silica | 0.5 |
| Color (yellow #6) | 0.2 |

The composition was tableted using the stokes tableting machine. There was good flow in the hopper and feeder and good release from the punch die.

It will be appreciated by those skilled in the art referring to this disclosure that the compression aid of this invention can be used to tablet any gum which has been granulated, e.g. by freezing prior to grinding, and is not limited to the tableting of the gum granules of this invention.

When referred to herein, the term "mesh" relates to the U.S. standard stainless steel mesh.

CLAIMS:

1. A chewing gum composition suitable for use in the preparation of a chewing gum tablet, the gum composition comprising a blended mixture of:

chewing gum granules which comprise a chewing gum base, a grinding aid and a sweetening agent; and

a compression aid which comprises two or more components chosen from a lubricant, a glidant and an anti-adherent;

wherein the gum composition has a moisture content of from 2% to 8% by weight of the gum composition.

2. A gum composition according to Claim 1, wherein the grinding aid is present in an amount of from 0.5% to 5% by weight of the gum composition.

3. A gum composition according to Claim 1 or 2, wherein the grinding aid has a particle size of 80 mesh, or a lesser size.

4. A gum composition according to Claim 1, 2 or 3, wherein the grinding aid is chosen from one or more of the following: food starches; sugar; polyhydric alcohols, for example, mannitol or sorbitol; maltodextrin, modified maltodextrins, preferably having a bulk density of from 48 to 272 kg/m$^3$ (3 to 17 lbs/cu.ft.); mineral salts; alkali metal salts, for example calcium carbonate; talc and fumed silica.

5. A gum composition according to any preceding claim, wherein the grinding aid is a mixture of food starches with sugar, 6X or less in size, in a 1:1 weight ratio.

6. A gum composition according to any preceding claim, wherein the grinding aid is water-soluble.

7. A gum composition according to any preceding claim, wherein the chewing gum granules have a particle size of from 4 to 30 mesh.

8. A gum composition according to any preceding claim, wherein the compression aid is present in an amount of from 2% to 15% by weight of the gum composition.

9. A gum composition according to any preceding claim, wherein the lubricant is chosen from:

metallic stearates, hydrogenated oils, hydrogenated vegetable oils, partially hydrogenated vegetable oils, polyethylene glycols, polyoxyethylene monostearate, animal fats, modified maltodextrins metallic sulphate satls, and mixtures thereof, preferably present in an amount of from 0.25% to 2%;

magnesium stearate, calcium stearate and mixtures thereof, preferably from 0.5% to 1.5% by weight magnesium stearate mixed with from 1% to 4% by weight maltodextrin; and

hydrogenated cottonseed oil, solid hydrogenated vegetable oil, hydrogenated soya oil and mixtures thereof, present in an amount of from 0.4% to 1%;

all percentages by weight based on the weight of the gum composition.

10. A gum composition according to any preceding claim, wherein the glidant is chosen from: talc, alkali metal salts, starch, polyhydric alcohols, maltodextrins and mixtures thereof, present in an amount of from 0.5% to 5% by weight of the gum composition; and calcium carbonate, mannitol, sorbitol, and mixtures thereof, present in an amount of from 1% to 2.5% by weight of the gum composition.

11. A gum composition according to any preceding claim, wherein the anti-adherent is chosen from: silicates, silicon dioxide, talc, alkali metal phosphates and mixtures thereof, present in an amount of from 0.2% to 1% by weight of the gum composition.

12. A gum composition according to any preceding claim, wherein the gum base comprises a natural or synthetic rubber or elastomer present in an amount of from 14% to 50% by weight of the gum composition.

13. A gum composition according to any preceding claim, wherein the sweeteneing agent is chosen from: water soluble sweeteneing agents, water soluble artificial sweetening agents, dipeptide based sweeteners and mixtures thereof.

14. A gum composition according to any preceding claim, further comprising a flavouring agent which is present in an amount of from 0.05% to 3.0% by weight of the gum composition.

15. A gum composition according to Claim 14, wherein the flavouring agent is a natural, artificial or synthetic flavour oil or flavouring.

16. A gum composition according to any preceding claim, further comprising one or more of the following: a colouring agent, an emulsifier, a filler, a plasticizer, a bulking agent and a softener.

17. A gum composition according to any preceding claim, further comprising an active agent which is incorporated into the compression aid prior to blending with the gum base, thereby entrapping the active agent between the gum granules.

18. A composition according to Claim 17, wherein the active agent is a vitamin, a pharmaceutical drug, a laxative, an appetite suppressant, or a medicament.

19. A tabletted chewing gum prepared from a chewing gum composition according to any preceding claim.

20. A process for producing a chewing gum tablet, which process comprises:

(i) providing a chewing gum base;

(ii) grinding the chewing gum base, by utilizing a grinding aid, to form a granulation;

(iii) blending the gum granulation with a compression aid;

(iv) tabletting the blended gum granules; and

(v) recovering the tabletted chewing gum composition.

21. A process according to Claim 20 in which a tabletted chewing gum as claimed in Claim 19 is prepared.

22. A process according to Claim 20 or 21, wherein an active agent is incorporated into the compression aid prior to formation of the tablet, thereby entrapping the active ingredient between the gum granules.

23. A process according to Claim 21 or to Claim 22 when appendant to Claim 21, wherein the flavouring agent is incorporated into the compression aid prior to blending with the gum granules.

24. A compression aid for use in tabletting a granulated chewing gum composition, wherein the chewing gum composition has a moisture content of from 2% to 8% by weight of the gum composition, comprising:

(a) from 0.25% to 2.0% by weight of a metal stearate;

(b) from 0.2% to 1% by weight of a fumed silica;

(c) up to 2% by weight of a hydrogenated triglyceride; and

(d)    from 1% to 4% by weight of a glidant
chosen from: calcium carbonate, talc, mannitol,
sorbitol, and modified maltodextrin.